Europäisches Patentamt

European Patent Office

Office européen des brevets

(19)

(11) Veröffentlichungsnummer: **0 388 806**

**A2**

(12) **EUROPÄISCHE PATENTANMELDUNG**

(21) Anmeldenummer: **90104969.2**

(22) Anmeldetag: **16.03.90**

(51) Int. Cl.5: **G06F 15/80**

(30) Priorität: **21.03.89 DE 3909153**

(43) Veröffentlichungstag der Anmeldung:
**26.09.90 Patentblatt 90/39**

(84) Benannte Vertragsstaaten:
**BE DE FR GB NL**

(71) Anmelder: **Bodenseewerk Gerätetechnik GmbH**
**Alte Nussdorfer Strasse 15 Postfach 1120**
**D-7770 Überlingen/Bodensee(DE)**

(72) Erfinder: **Häusing, Michael, Dr.-Ing.**
**Strandweg 29 A**
**D-7770 Überlingen(DE)**
Erfinder: **Hesse, HansKlaus, Dr.-Ing.**
**Im Gehren 20**
**D-7770 Überlingen(DE)**

(74) Vertreter: **Weisse, Jürgen, Dipl.-Phys. et al**
**Bökenbusch 41 Postfach 11 03 86**
**D-5620 Velbert 11-Langenberg(DE)**

(54) **Parallelrechnerstruktur zum Modellieren und Trainieren künstlicher Neuronaler Netze.**

(57) Eine Parallelrechnerstruktur zum Modellieren und Trainieren künstlicher Neuronaler Netze ist an einen Host-Rechner angeschlossen und als zweidimensionale Matrix aus einfachen, identischen Prozessorelementen ausgebildet. Die Prozessorelemente werden nach dem SIMD-Prinzip von einem Sequencer mit einem Befehlsstrom versorgt. Die auf der Diagonalen der Matrix angeordneten Prozessorelemente werden den Knoten des Neuronalen Netzes zugeordnet und zur Durchführung der Neuronenfunktionen bestimmt. Die nichtdiagonalen Prozessorelemente übernehmen die Verknüpfungen zwischen den Knoten und werden für die Funktion der veränderbaren synaptischen Gewichtungen bestimmt. Die Matrix besitzt erstens eine lokale Nachbarschaftsvernetzung zu den jeweils vier nächsten Nachbarprozessoren. Darüber hinaus gehen von den Neuronenprozessoren, getrennt nach x- und y-Richtung Leitungen aus, welche die nicht-diagonalen Synapsenprozessoren parallel ansteuern. In der einen Richtung dienen diese Leitungen der Beschleunigung der Verteilung der Berechnungsergebnisse der Neuronenprozessoren an die Synapsenprozessoren. In der anderen Richtung dienen die Leitungen der beschleunigten Verteilung der Korrekturdaten während des Trainings.

Fig.4

## Parallelrechnerstruktur zum Modellieren und Trainieren künstlicher Neuronaler Netze

### Technisches Gebiet

Die Erfindung betrifft eine Parallelrechnerstruktur zum Modellieren, d.h. Aufstellen, Untersuchen und Austesten, sowie zum Trainieren, d.h. anwendungsspezifischen Dimensionieren und Optimieren, künstlicher Neuronaler Netze, angeschlossen an einen Host-Rechner und ausgebildet als zweidimensionale Matrix aus einfachen, identischen Prozessorelementen, von denen jedes lokal mit seinen vier nächsten Nachbarn verknüpft ist, und die nach dem SIMD-Prinzip von einem Sequencer mit einem Befehlsstrom versorgt werden.

### Zugrundeliegender Stand der Technik

Unter einem künstlichen Neuronalen Netz versteht man ein Netzwerk aus Signalverarbeitungs und Signalübertragungs einheiten nach dem Vorbild des Vernetzungs- und synaptischen Verschaltungsprinzips von Neuronen in natürlichem Nervenzellengewebe in Gehirnstrukturen (DTV-Taschenatlas der Physiologie; Rumelhart und McClelland : "Parallel Distributed Processing" MIT Press, 1986 Kapitel 2).

Die Signalverarbeitungseinheiten entsprechen den Neuronen der Gehirnstrukturen (sie werden daher im folgenden als Neuronenprozessoren oder, wo es unmißverständlich ist, der Kürze halber auch als "Neuronen" bezeichnet) und bilden die Knoten des Netzes. Die Signalübertragungseinheiten entsprechen den Synapsen (und werden im folgenden als Synapsenprozessoren oder kurz "Synapsen" bezeichnet) zwischen den sendenden und empfangenden Ausläufern der Neuronen (den Axonen bzw. Dendriten). Sie bauen die eigentliche Verknüpfungsstruktur des Netzes auf.

Da die Signalverarbeitung der Neuronen in einem natürlichen Neuronalen Netz vergleichsweise einfach ist, versucht man auch bei den Prozessoren für die Knoten eines künstlichen Neuronalen Netzes mit sehr geringer Signalverarbeitungsleistung auszukommen. Betrachtet man die Synapsen im wesentlichen als veränderliche und gezielt veränderbare "Tore" auf den Signalübertragungswegen zwischen den Neuronen natürlicher Netze, braucht man auch den künstlichen Synapsen nur geringe Signalverarbeitungsleistung zuzuweisen. Die Leistungsfähigkeit und Geschwindigkeit eines nach neuronalem Vorbild aufgebauten Parallelrechners sollte dann auf der Vielzahl der simultan tätigen "Neuronen" sowie auf der Art der Vernetzung und der Variabilität der den Signalaustausch beeinflussenden "Synapsen" beruhen.

Die Hauptgründe dafür, daß trotz allgemein sehr fortgeschrittener Rechnertechnik diese Art von Rechnerstrukturen bzw. Parallelrechner überhaupt zwar Interesse, aber nur wenig praktischen Einsatz gefunden haben, können darin gesehen werden, daß einerseits die heute fast ausschließlich im Einsatz befindlichen von Neumann-artigen Architekturen durch die überlegene Geschwindigkeit der Halbleiterelemente und durch den Einsatz von Spezial strukturen in den CPUs den weitaus größten Anteil der anstehenden Anwendungsfälle abzudecken imstande waren, und daß sich andererseits die Probleme der Koordinierung und des Datenmanagements bei Rechnerstrukturen mit parallel arbeitenden Prozessoren, wie man sie etwa seit Beginn der siebziger Jahre gezielter untersucht, als wesentlich schwieriger und aufwendiger als erwartet herausgestellt haben (Giloi: "Rechnerarchitektur" Springer 1981).

Heute kann die seit ca. zwei Jahren verfügbare sogenannte "Connection Machine" mit rund 64000 ($2^{16}$) Prozessorelementen und einer ausgeklügelten Verknüpfungsstruktur, die einen weitgehenden, wenn auch noch nicht völlig simultanen Signalaustausch zwischen den Prozessorelementen gestattet, als ein erster kommerziell erhältlicher, massiver und halbwegs universell für Probleme mit inhärenter Parallelität einsetzbarer Parallelrechner angesehen werden (Hillis: "The Connection Machine" MIT Press, Cambridge, Massachusetts (1985)).

Das stärker gewordene Interesse an parallelen Rechnerarchitekturen resultiert u.a. aus der Tatsache, daß von Neumann-artige Strukturen an geschwindigkeitsmäßige Leistungsgrenzen stoßen, die nur durch den parallelen Einsatz mehrerer CUPs überwunden werden können, daß der Freiheitsgrad, der durch unterschiedliche Vernetzungsstrukturen der Prozessoren ins Spiel kommt, zu neuartigen Verarbeitungskonzepten geführt hat, und daß die Hoffnung besteht, mit vielen einfachen und billigen Prozessorelementen zu einem günstigeren Preis-Leistungsverhältnis zu kommen.

Allerdings müssen bei der Entscheidung für eine dieser beiden sehr vereinfachten Alternativen "ein Großer" oder "viele Kleine" weitere Kriterien herangezogen werden. Liegen beispielsweise komplexe Algorithmen mit komplizierten mathematischen Ausdrücken und inhärent sequentiellen logischen Strukturen vor, wird der Großrechner mit ausgeklügelter CPU im Vorteil sein. Sollen jedoch Vorgänge modelliert werden, die nur sehr einfache Rechenoperationen verlangen, die zudem unabhängig voneinander ablaufen können, wäre ein Parallelrechner im Vorteil.

Für den kommerziellen Erfolg der von Neumann-artigen Architekturen entscheidend war bisher ihre Universalität, d. h. die Ausnutzbarkeit der Tatsache, daß man jedes Problem immer so zerlegen kann, daß die einzelnen mathematischen und logischen Schritte alle zeitlich sequentiell ausgeführt werden können. Leider läßt sich als Gegenstück hierzu keine entsprechende Aussage über Parallelisierbarkeit für Parallelrechner finden: Es gibt keinen universellen und gleichzeitig - sogar bei Beschränkung auf parallelisierbare Aufgabenstellungen - für alle Aufgaben dieser Untermenge optimalen Parallelrechner. Allenfalls kann man Probleme nach Typen unterscheiden, d. h. klassenweise zusammenfassen, so daß man für jede Aufgabenklasse eine weitgehend optimale Struktur bereitstellen könnte.

Die Klasse der nach neuronalen Vorbildern konzipierten Parallelrechner gewinnt an Bedeutung, als die zugrunde liegenden Modelle aus heutiger Sicht am ehesten zu versprechen scheinen, bestimmte Leistungen des Gehirns, wie Lernen, Erkennen oder Assoziieren, die noch nicht sehr gut verstanden sind, nachbilden zu können, und die, müßte man beispielsweise die Menge der synaptischen Verbindungen des Gehirns (vorsichtig geschätzt auf $10^{14}$) auf einem sequentiellen Rechner nachbilden, zu indiskutabel langen Rechenzeiten führen würden. Im Vergleich zur oben erwähnten, universellen Connection Machine bieten sie ein viel besseres Preis-Leistungsverhältnis.

Eigentlich kann man natürliche Neuronen nicht als "Rechner" im Sinne einer algorithmischen Verarbeitung von (digitalen) Zahlen bezeichnen, sie ähneln vielmehr Analogbausteinen, die Signale mit den ihnen zur Verfügung stehenden Mechanismen der elektrischen Erregungsausbreitung an den Membranen der Nervenzellen manipulieren. Trotzdem erscheint es vernünftig, diese Signalmanipulation auf digitalen Prozessorelementen nachzuahmen, um zunächst bequem eine Anzahl freier und zu optimierender Parameter einbringen zu können. Zusammenfassungen über die mathematische Modellierung der Funktion von Neuronen und der darauf aufbauenden Neuronalen Netze finden sich in dem vorstehend schon erwähnten Buch von Rumelhart und McClelland und in einer Veröffentlichung von Kemke "Der Neuere Konnektionismus" in "Informatik Spektrum" 11(1988), 143 (Springer).

Ähnlich wie bei der Entwicklung eines Musterklassifikators zwischen einer Lern- oder Trainingsphase und einer Anwendungsphase unterschieden wird, beinhaltet die Entwicklung eines "neuronalen Programms" eine Lernphase zur Modellierung der neuronalen Struktur und zur anwendungsspezifischen Optimierung der synaptischen Verschaltung (einem Training), sowie einer Anwenaungsphase, die dann mit fest eingestellten Größen eventuell auf einer anderen Hardware-Struktur mit einfacheren und billigeren Halbleiterbausteinen ablaufen könnte.

## Offenbarung der Erfindung

Der Erfindung liegt die Aufgabe zugrunde, eine Parallelrechnerstruktur für die erstere Phase bereitzustellen, die optimal für das Modellieren, d.h. Aufstellen, Untersuchen und Austesten, sowie für das Trainieren, d.h. das anwendungsspezifische Dimensionieren und das Optimieren freier Parameter, geeignet ist.

Für die Anwendungsphase können die bezüglich ihrer Funktion optimierten Bausteine des Neuronalen Netzes vermutlich durch einfachere Halbleiterelemente ersetzt werden, so daß auch eine höhere Integrationsdichte erreicht werden kann.

Unter Modellieren wird hier das Bereitstellen einer Grundstruktur für eine gewünschte Leistung, beispielsweise für Assoziationsvermögen oder sogenanntes "Unsupervised Learning", verstanden. Diese Grundstruktur drückt sich neben der Art der mathematischen Funktionen für die Signalverarbeitung in den "Neuronen" primär in der expliziten Angabe der Verknüpfungsstruktur bezüglich exzitatorischer, inhibitorischer oder fehlender Verbindung (darstellbar durch die Belegung der sogenannten Verknüpfungsmatrix mit Vorzeichen bzw. Nullen) aus.

Erfindungsgemäß wird diese Aufgabe dadurch gelöst, daß

(a) die auf der Diagonalen der Matrix angeordneten Prozessorelemente den Knoten des Neuronalen Netzes zugeordnet und zur Durchführung der Neuronenfunktionen bestimmt werden,

(b) die nichtdiagonalen Prozessorelemente die Verknüpfungen zwischen den Knoten übernehmen und für die Funktion der veränderbaren synaptischen Gewichtungen bestimmt werden,

(c) in der einen Richtung der Matrix von den diagonalen Neuronenprozessoren ausgehende und alle nichtdiagonalen Synapsenprozessoren der gleichen Spalte parallel ansteuernde Leitungen vorgesehen sind, über die die simultane Verteilung der Berechnungsergebnisse der Neuronenprozessoren an alle Synapsenprozessoren der jeweiligen Spalte der Matrix vorgenommen wird.

(d) in der anderen Richtung weiterhin von den Neuronenprozessoren ausgehende, alle Synapsenprozessoren einer Zeile ansteuernde Verbindungsleitungen vorgesehen sind, über die Korrekturbeiträge für die Änderungen der synaptischen Gewichtungen übermittelbar sind.

Ausgestaltungen der Erfindung sind Gegenstand der Unteransprüche

Ein Ausführungsbeispiel der Erfindung ist nachstehend unter Bezugnahme auf die zugehörigen Zeichnungen näher erläutert.

## Kurze Beschreibung der Zeichnungen

Fig.1 zeigt eine Verknüpfungsstruktur "Auto -Assoziator"

Fig.2 zeigt eine Verknüpfungsstruktur "Hetero -Assoziator".

Fig.3 zeigt eine Verknüfungsstruktur mit "Hidden Layers".

Fig.4 zeigt perspektivisch eine Parallelrechnerstruktur zum Modellieren und Trainieren künstlicher Neuronaler Netze.

Fig.5 ist eine schematische schaltungsmäßige Darstellung der Parallelrechnerstruktur von Fig.4.

Fig.6 zeigt eine Einzelheit von Fig.5.

## Bevorzugte Ausführung der Erfindung

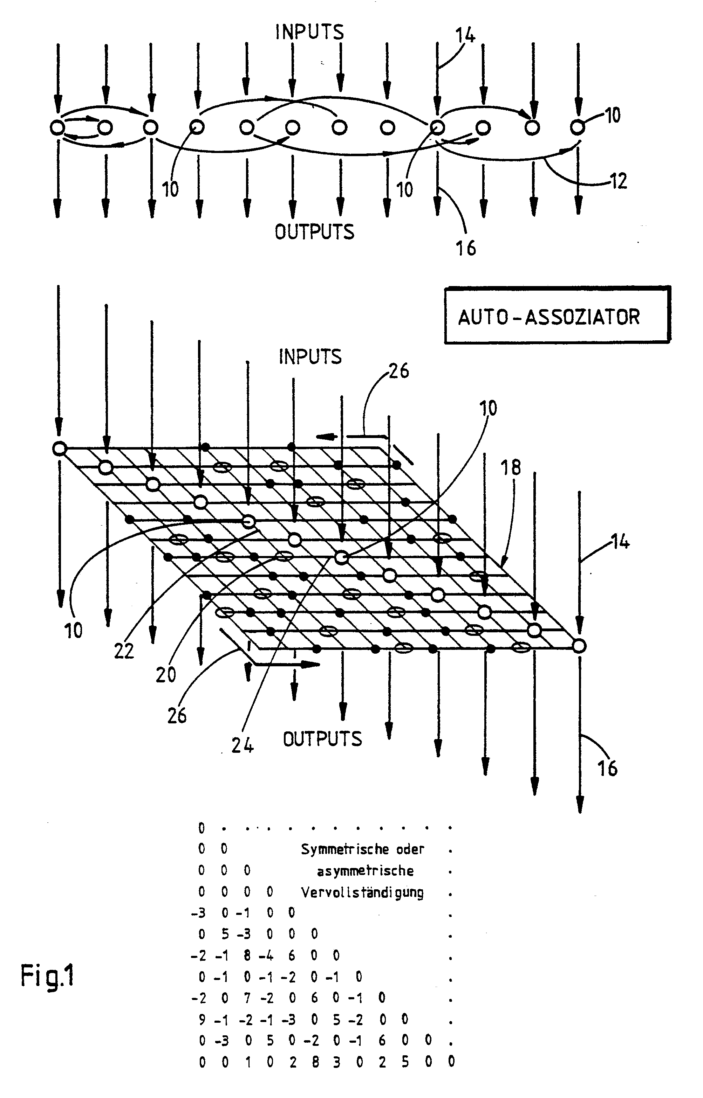

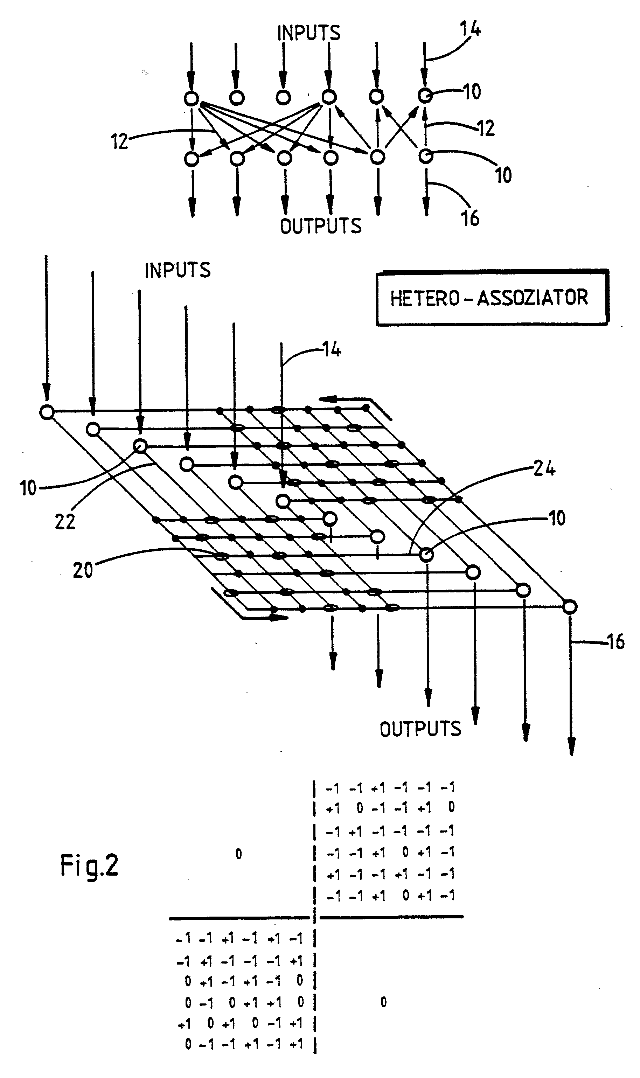

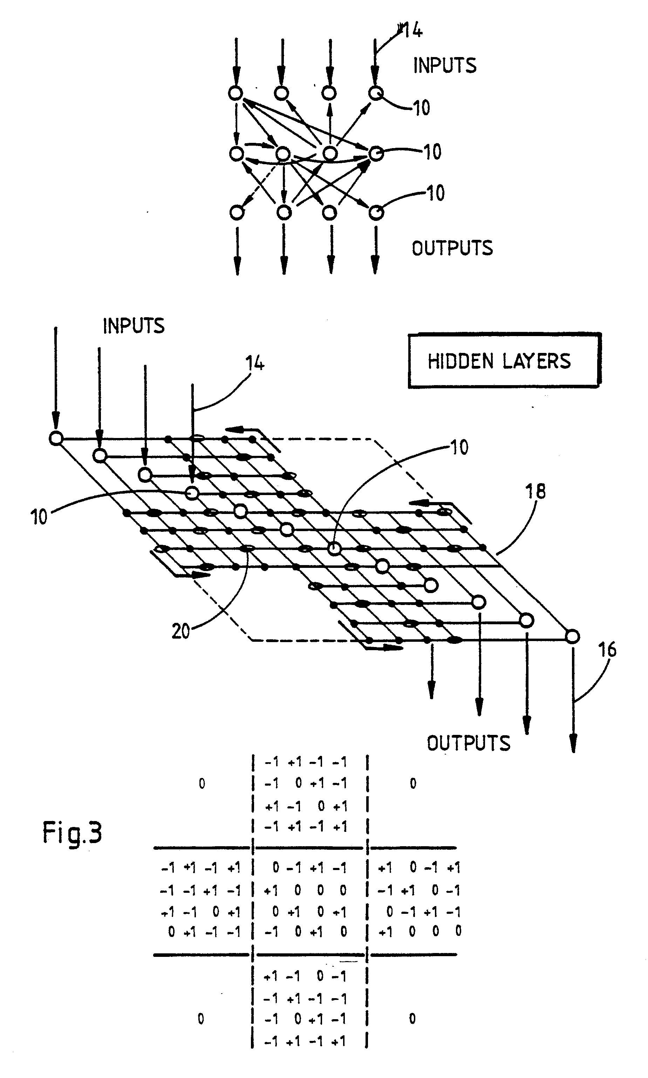

Beispiele für verschiedene, zunächst nach der Zahl der signalverarbeitenden Schichten unterschiedene Verknüpfungsstrukturen finden sich in den Figuren 1 - 3. Im jeweils obersten Teil symbolisieren die dicken Kreise 10 die Knoten des Netzes und die mit schlanken Spitzen versehenen Pfeile 12 die gerichteten Verbindungen zwischen den Knoten 10. Zusätzlich sind als Pfeile mit breiten Spitzen der Vollständigkeit halber externe Eingabekanäle 14 und Ausgabekanäle 16 dargestellt.

Die mittleren Teile der Figuren veranschaulichen die Verknüpfungsmatrix 18. Jeder belegte Kreuzungspunkt 20 zwischen einem vertikalen (sendenden) Ausläufer 22 eines "Neurons" 10 und einem horizontalen (empfangenden) Ausläufer eines anderen "Neurons" 10 entspricht einer gesetzten Verknüpfung der entsprechenden Neuronen. Die gewinkelten Pfeile 26 an den Rändern der Matrix 18 definieren den Richtungssinn der Verknüpfung. Der exzitatorische oder inhibitorische Charakter der Verbindung wird durch offene oder ausgefüllte Kreise wiedergegeben, und die Größe der Kreise sei ein Maß für die mit der Verknüpfung verbundene Gewichtung der Signale.

Die unteren Teile der Figuren geben die Verknüpfungsstrukturen in numerischer Form wieder. Nullen entsprechen fehlenden Verknüpfungen, die Vorzeichen betreffen den exzitatorischen bzw. inhibitorischen Charakter.

Zusammengefaßt: Voraussetzungen zur effizienten Durchführung der genannten Modellierungs- und Trainingsphasen eines künstlichen Neuronalen Netzes sind jeweils für sich parallel arbeitende Neuronenprozessoren und Synapsenprozessoren, die geeignet miteinander vernetzt sind, und in denen die neuronalen Eigenschaften softwaremäßig modifizierbar sind.

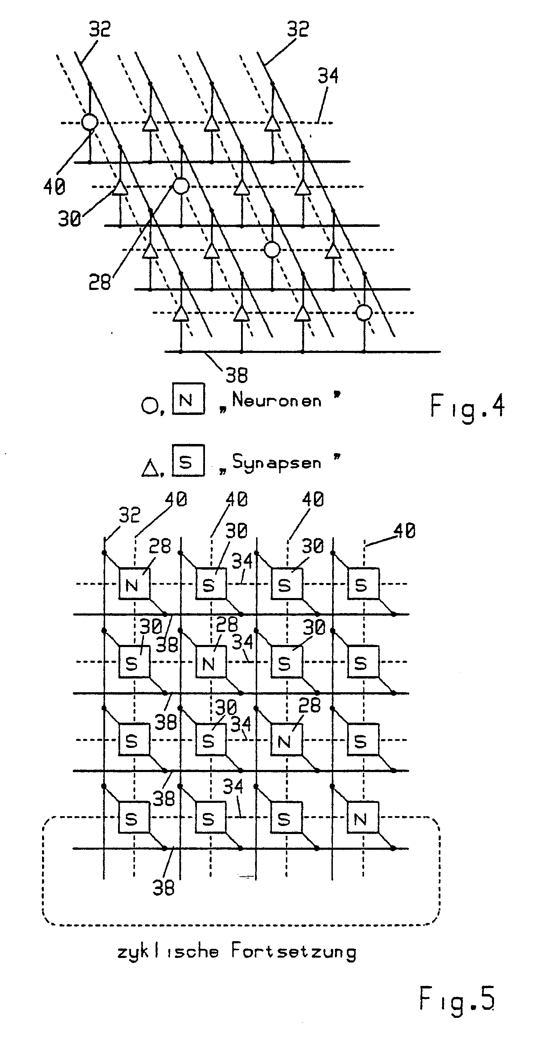

Die Lösung stellen, wie in Figur 4 perspektivisch oder in Figur 5 schematisch dargestellt ist, matrixförmig miteinander vernetzte, identische Prozessoren einfachster Art (z. B. 1-bit-Prozessoren) dar. Durch Setzen einer Flag während einer anfänglichen Initialisierungsphase werden die Prozessoren in "Neuronen" 28 und "Synapsen" 30 unterschieden. Da sich die interne Verarbeitung in den "Neuronen" 28, die Gewichtung der Signale in den "Synapsen" 30 oder die Modifikation der Synapsengewichte immer abwechseln, d.h. nie zeitlich überlappen, können alle Abläufe in den Programm-Code eines Sequencers eingebracht werden, der je nach gesetzter Flag von den "Neuronen" 28 oder den "Synapsen" 30 abgearbeitet wird.

Über die in Figur 4 und 5 als "Axone" gekennzeichneten Leitungen 32 sendet jedes "Neuron" 28 sein errechnetes Signal an die ihm nachgeschalteten "Synapsen" 30. Die Ergebnisse der synaptischen Gewichtungen müssen einzeln von den betroffenen "Neuronen" 28 empfangen und verarbeitet werden, und werden daher entlang der eine Art "Dendriten" darstellenden gestrichelten Linien 34 zu den "Neuronen" 28 getaktet. Die Neuronen 28 berechnen aus den aufgesammelten Signalen neue Ausgangsfunktionen und können entweder den Zyklus wiederholen oder zu einem Korrekturschritt der synaptischen Gewichtungen wechseln. In ähnlicher Weise sind benachbarte Elemente (Neuronen oder Synapsen) in der dazu senkrechten Richtung der Matrix längs der gestrichelten Linien 36 miteinander verbunden.

Die globalen "Dendriten"-parallelen Verknüpfungen in Form von Leitungen 38 beschleunigen Lernalgorithmen, bei denen die Lernabweichungen zwecks Korrektur der synaptischen Gewichtungen parallel an alle Synapsen zurückgereicht werden müssen, im Vergleich zu einer Lösung, bei welcher die "Dendriten" die Aufgabe der Verteilung der Lernabweichungen übernehmen müßten.

In einer Ausgestaltung der Erfindung werden die "Dendriten" zyklisch vom rechten zum linken Rand des Prozessornetzes fortgesetzt. Dies erst ermöglicht die volle Ausschöpfung des SIMD-Prinzips, d.h. daß alle mit dem gleichen Befehlsstrom des Sequencers versorgten Prozessoren das Einsammeln der Ergebnisse der synaptischen Gewichtungen entlang der Dendriten unabhängig von der Prozessorzeile mit genau N Schiebetakten (wenn N die horizontale Ausdehnung des Matrix ist), wahlweise nach rechts oder links, bewerkstelligen können.

Voraussetzung für den Aufbau größerer Netze ist eine Modularisierung der Prozessormatrix: Begrenzt durch die mögliche Integrationsdichte, durch die Zahl der externen Anschlüsse eines Halbleiterbausteins (Chips) und in Abhängigkeit von der Größe des jedem Prozessorelement zugeordneten RAM-Bereichs dürften etwa zwischen 8 x 8 und 12 x 12 Prozessoren auf einem Chip untergebracht werden können.

In einer weiteren Ausgestaltung der Erfindung wird die Prozessormatrix daher aus horizontal und vertikal periodisch fortsetzbaren (translationsinvariaten"), identischen Halbleitermoduln als Submatrizen zusammengesetzt, so wie Kacheln zu einer größeren Fläche zusammengesetzt werden können. Jeder Modul kann Treiber an den Rändern aufweisen, falls sich Fan-out Probleme für die globalen Vernetzungslinien ergeben. Eine Unterscheidung in "diagonale" und "off-diagonale" Module ist nicht nötig, da die Unterscheidung in "Neuronen" und "Synapsen" erst bei der Initialisierung vorgenommen wird (s.o.).

Da es andererseits häufig vorkommt, daß in mehrschichtigen Netzen die Neuronen einer Schicht unter sich keine Signale austauschen, kann es, um Zeit zu sparen, sinnvoll sein, die damit entfallenden "Synapsen" in dieser Schicht - entsprechend allen nichtdiagonalen Prozessoren - von vornherein einzusparen, indem sie in Dendritenrichtung überbrückt werden. Dies bedarf bei der Herstellung der Halbleiterbauteile keines gänzlich neuen Maskensatzes, sondern lediglich des Austausches einer oder zweier Masken für die Leiterbahnen-Metallisierungen. Aus denselben Gründen wären reine Blindmodule sinnvoll, die keine Prozessoren, sondern nur Verbindungsleitungen vom rechten zum linken sowie vom oberen zum unteren Rand aufweisen, die nur eine Überbrükkungsfunktion in allen Richtungen ausüben und an solchen Stellen der Verknüpfungsmatrix eingesetzt werden sollen, wo letztere nur Nullen aufweist.

Um die Module soweit wie möglich von externen Anschlüssen zu entlasten, können die zyklischen Verbindungen "Dendriten" über die Module tragenden Platinen oder sonstigen Träger implementiert werden. Weiterhin kann es vorteilhaft sein, die einzelnen Module steckbar auszubilden, um beim Übergang zu einem anderen Netztyp nicht völlig neue Platinen aufbauen zu müssen. Um nicht auf das SIMD-Prinzip verzichten zu müssen, muß darauf geachtet werden, daß die Summe aller nicht überbrückten Synapsen in allen Zeilen der Gesamtprozessormatrix gleich ist.

Die Modellierung eines künstlichen Neuronalen Netzes bedarf vor dem Beginn der eigentlichen Rechnung einer Initialisierung, bei welcher die die "Neuronen" und die "Synapsen" unterscheidende Flag, Anfangsgewichtungen für die Synapsen etc. geladen werden müssen. Zu diesem Zweck können an einem vertikalen Rand der Prozessormatrix Weichen-artige Umschalteinrichtungen der Datenpfade, beispielsweise Multiplexer eingefügt werden, die im Normal betrieb die zyklische Verbindung gewährleisten und in der Initialisierungsphase das Laden der Anfangsbedingungen über die "Dendriten" ermöglichen.

Da parallele Aufgaben, beispielsweise in der Bildverarbeitung, zu unverhältnismäßig großen Netzwerken führen würden, wollte man jedem Bildpunkt einen eigenen Prozessor zuordnen, führt man sogenannte virtuelle Prozessoren ein, indem man mehreren der zu bearbeitenden Daten (im Beispiel den Bildpunkten des Bildes) nur einen Prozessor zuordnet, der dann einen kleinen lokalen Bereich des Bildes abarbeitet (vgl.Hillis "The Connection Maschine"). Dies erfordert einen um den Grad der Virtualisierung erhöhten Zeitfaktor und einen um denselben Faktor größeren lokalen RAM-Bereich für jeden realen Prozessor, da jeder virtuelle Prozessor seinen privaten realen RAM-Bereich braucht.

In einer weiteren Ausgestaltung der Erfindung wird daher die Möglichkeit vorgesehen, eine Virtualisierung auch für die oben erläuterten Hardware-Module zugänglich zu machen, indem für den Bedarfsfall für jeden Prozessor externe RAM-Bereich zuschaltbar werden. Dies erfordert zusätzlich neben einer mehrere Bit breiten Adressleitung so viele Datenleitungen zu den externen RAM-Bereichen wie Prozessoren auf einem Modul integriert sind. Des weiteren müssen auf den Träger der Module zusätzlich Plätze für diese, vorzugsweise steckbaren, externen RAMs vorgesehen werden.

Bekannt sind Prozessoren mit vier Ports. Solche Prozessoren sind z.B. in dem Buch von Duff "Computing Structures for Image Processing", Academic Press 1983 und in der NCR-Firmendruckschrift NCR 45 CG 72 (1984) "A Geometric Arithmetic Parallel Processor" (GAPP) beschrieben.

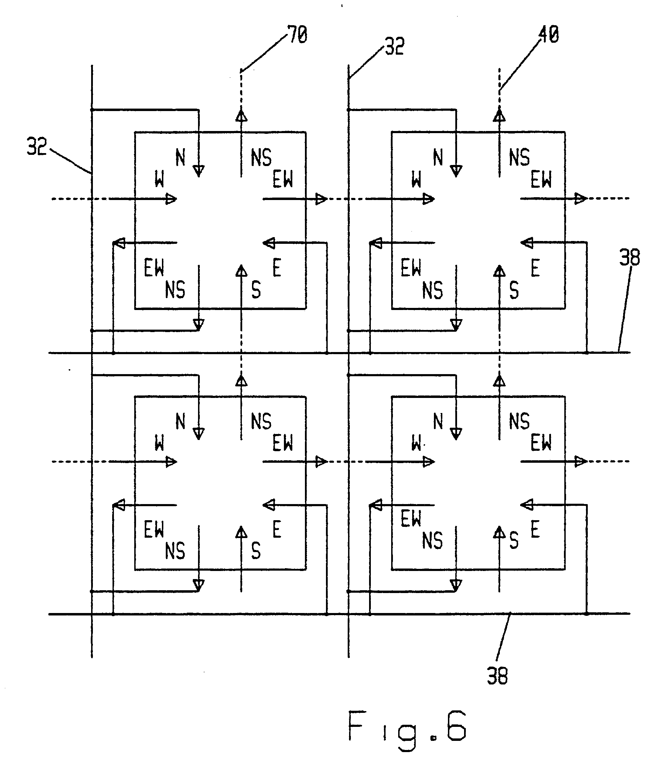

Die Erweiterung auf Prozessoren mit sechs Ports ist im allgemeinen Fall über Multiplexer für die empfangenden Register möglich. Im Fall der vorerwähnten GAPP-Bausteine nach der NCR-Firmendruckschrift kann die spezielle Form der Signalausbreitungsrichtungen ausgenutzt werden. Das ist in Fig.6 dargestellt.

Fig.6 zeigt vier GAPP-Bausteine der in der NCR-Firmendruckschrift beschriebenen Art. Jeder der GAPP-Bausteine weist vier Eingänge auf, die mit N,S,E und W gekennzeichnet sind, endsprechend der gebräuchlichen Terminologie "North", "South", "East" und "West". Jeder GAPP-Baustein weist weiterhin real zwei Ausgänge NS und EW auf, wobei jeder dieser Ausgänge hier doppelt dargestellt ist. Der Ausgang EW jedes GAPP-Bausteins ist mit einer Leitung 38 verbunden. Ebenso ist der Ausgang EW mit den benachbarten GAPP-Bausteinen längs eines "Dendriten" 34 verknüpft. Die Signalausbreitungsrichtung hängt bei dieser Anordnung davon ab, welcher der benachbarten GAPP-Bausteine die an dem Ausgang EW erscheinende Information aufzunehmen bereit ist.

In entsprechender Weise ist der Ausgang NS einmal mit der zugehörigen, ein "Axon" bildenden Leitung 32 verbunden. Zum anderen ist der Ausgang NS längs der in "Nord-Süd-Richtung" verlaufenden, gestrichelten Linie 40 in Fig.4 bis 6 mit den in dieser Richtung benachbarten GAPP-Bausteinen verknüpft. Auch hier hängt die Signalausbreitungsrichtung davon ab, welcher der in NS-Richtung benachbarten GAPP-Bausteine für die Aufnahme der am Ausgang NS erscheinenden Information bereit ist.

Es sind also nicht, wie es aus Fig.5 zunächst erscheint, Bausteine mit sechs bidirektionalen Ports erforderlich. Vielmehr hat jeder GAPP-Baustein vier Eingänge und zwei Ausgänge, so daß die Parallelrechnerstruktur mit vorhandenen Bauteilen aufgebaut werden kann.

**Ansprüche**

1. Parallelrechnerstruktur zum Modellieren und Trainieren künstlicher Neuronaler Netze, angeschlossen an einen Host-Rechner und ausgebildet als zweidimensionale Matrix aus einfachen, identischen Prozessorelementen, von denen jedes lokal mit seinen vier nächsten Nachbarn verknüpft ist, und die nach dem SIMD-Prinzip von einem Sequencer mit einem Befehlsstrom versorgt werden, **dadurch gekennzeichnet, daß**

(a) die auf der Diagonalen der Matrix angeordneten Prozessorelemente den Knoten des Neuronalen Netzes zugeordnet und zur Durchführung der Neuronenfunktionen bestimmt werden,

(b) die nichtdiagonalen Prozessorelemente die Verknüpfungen zwischen den Knoten übernehmen und für die Funktion der veränderbaren synaptischen Gewichtungen bestimmt werden und

(c) in der einen Richtung der Matrix von den diagonalen Neuronenprozessoren ausgehende und alle nichtdiagonalen Synapsenprozessoren der gleichen Spalte parallel ansteuernde Leitungen vorgesehen sind, über die die simultane Verteilung der Berechnungsergebnisse der Neuronenprozessoren an alle Synapsenprozessoren der jeweiligen Spalte der Matrix vorgenommen wird.

(d) in der anderen Richtung weiterhin von den Neuronenprozessoren ausgehende, alle Synapsenprozessoren einer Zeile ansteuernde Verbindungsleitungen vorgesehen sind, über die Korrekturbeiträge für die Änderungen der synaptischen Gewichtungen übermittelbar sind.

2. Parallelrechnerstruktur nach Anspruch 1, **dadurch gekennzeichnet, daß** die Unterscheidungen zwischen den beiden Funktionen als Neuronenprozessor und Synapsenprozessor durch eine FLAG bewirkt wird,

3. Parallelrechnerstruktur nach einem der Ansprüche 1 bis 2, **dadurch gekennzeichnet, daß** die lokalen Verbindungen zwischen den Prozessoren von dem jeweils einen zu dem gegenüberliegenden Rand der Prozessormatrix zyklisch fortgesetzt sind.

4. Parallelrechnerstruktur nach einem der Ansprüche 1 bis 3, **dadurch gekennzeichnet, daß** die Matrix aus Prozessorelementen aus einzelnen, identischen, translationsinvarianten, Teilmatrizen entsprechenden Hardware-Moduln zusammengesetzt werden kann.

5. Parallelrechnerstruktur nach den Ansprüchen 1 und 4, **dadurch gekennzeichnet, daß** spezielle Moduln vorgesehen sind, bei denen alle nichtdiagonalen Prozessoren überbrückt sind, .

6. Parallelrechnerstruktur nach den Ansprüchen 1, 4 und 5, **dadurch gekennzeichnet, daß** in Abhängigkeit von den untersuchten Neuronalen Modelltypen Moduln, die nur mit Nullen besetzte Matrixelemente enthalten, fortgelassen und durch Blindmodule ersetzt sind, die nur die Verbindungen von dem einen zum anderen Rand des fortgelassenen Moduls in der einen bzw. der anderen Richtung überbrücken.

7. Parallelrechnerstruktur nach den Ansprüchen 1 bis 3, **dadurch gekennzeichnet, daß** die zyklischen Fortsetzungen der lokalen horizontalen Verbindungen extern auf den die Hardware-Moduln tragenden Trägern implementiert sind.

8. Parallelrechnerstruktur nach den Ansprüchen 1 bis 5, **dadurch gekennzeichnet, daß** an den in der einen Richtung verlaufenden Rändern oder Randstücken der Gesamtmatrix in die externen, zyklischen Fortsetzungen Umschalteinrichtungen der Datenpfade eingefügt sind, die in einer Initialisierungsphase das Laden von Startbedingungen über die lokalen, horizontalen Verbindungswege ermöglichen.

9. Parallelrechnerstruktur nach den Ansprüchen 1 und 4, **dadurch gekennzeichnet, daß**

(a) Datenleitungen von jedem der Prozessoren eines Moduls und Adressleitungen an die Zuleitungen (Pins) der Module vorgesehen sind, über die externe RAMs angesprochen werden können, und

(b) auf den Trägern der Module entsprechende Plätze vorgesehen sind, auf denen die externen RAM-Bausteine angeordnet werden können.

10. Parallelrechnerstruktur nach Anspruch 9, **dadurch gekennzeichnet, daß** die RAM-Bausteine steckbar sind.

INPUTS

14

10

10

10

12

16

OUTPUTS

AUTO-ASSOZIATOR

INPUTS

26

10

18

14

10

22

20

26

24

16

OUTPUTS

```
0   ·   ·   ·   ·   ·   ·   ·   ·   ·   ·
0   0              Symmetrische oder      ·
0   0   0            asymmetrische         ·
0   0   0   0     Vervollständigung        ·
-3  0  -1   0   0                          ·
0   5  -3   0   0   0                       ·
-2 -1   8  -4   6   0   0                   ·
0  -1   0  -1  -2   0  -1   0               ·
-2  0   7  -2   0   6   0  -1   0           ·
9  -1  -2  -1  -3   0   5  -2   0   0       ·
0  -3   0   5   0  -2   0  -1   6   0   0   ·
0   0   1   0   2   8   3   0   2   5   0   0
```

Fig.1

INPUTS

14

10

12

12

10

16

OUTPUTS

INPUTS

HETERO – ASSOZIATOR

14

24

10

10

22

10

20

16

OUTPUTS

**Fig.2**

0

$$
\begin{array}{rrrrrr}
-1 & -1 & +1 & -1 & -1 & -1 \\
+1 & 0 & -1 & -1 & +1 & 0 \\
-1 & +1 & -1 & -1 & -1 & -1 \\
-1 & -1 & +1 & 0 & +1 & -1 \\
+1 & -1 & -1 & +1 & -1 & -1 \\
-1 & -1 & +1 & 0 & +1 & -1 \\
\end{array}
$$

$$
\begin{array}{rrrrrr}
-1 & -1 & +1 & -1 & +1 & -1 \\
-1 & +1 & -1 & -1 & -1 & +1 \\
0 & +1 & -1 & +1 & -1 & 0 \\
0 & -1 & 0 & +1 & +1 & 0 \\
+1 & 0 & +1 & 0 & -1 & +1 \\
0 & -1 & -1 & +1 & -1 & +1 \\
\end{array}
$$

0

INPUTS

14

INPUTS

10

10

10

OUTPUTS

INPUTS

14

HIDDEN LAYERS

10

10

18

20

16

OUTPUTS

Fig.3

|   | | -1 +1 -1 -1 | |   |
|---|---|---|---|---|
| 0 | | -1  0 +1 -1 | | 0 |
|   | | +1 -1  0 +1 | |   |
|   | | -1 +1 -1 +1 | |   |
| -1 +1 -1 +1 | | 0 -1 +1 -1 | | +1  0 -1 +1 |
| -1 -1 +1 -1 | | +1  0  0  0 | | -1 +1  0 -1 |
| +1 -1  0 +1 | | 0 +1  0 +1 | | 0 -1 +1 -1 |
| 0 +1 -1 -1 | | -1  0 +1  0 | | +1  0  0  0 |
|   | | +1 -1  0 -1 | |   |
|   | | -1 +1 -1 -1 | |   |
| 0 | | -1  0 +1 -1 | | 0 |
|   | | -1 +1 -1 +1 | |   |

EP 0 388 806 A2

O, N „Neuronen"

△, S „Synapsen"

Fig.4

zyklische Fortsetzung

Fig.5

Fig.6